# FASCICULE DE BREVET EUROPEEN

(11) **EP 1 901 047 B1**
(45) Date de publication et mention de la délivrance du brevet: **13.10.2010**
(21) Numéro de dépôt: 07301316.1
(22) Date de dépôt: 22.08.2007
(51) Int. Cl.: G01J 5/10, G01J 5/20, B81B 3/00

(54) **Dispositif électronique de détection et détecteur comprenant un tel dispositif**
Elektronische Erfassungsvorrichtung und diese Vorrichtung umfassender Sensor
Electronic detection device and detector comprising such a device

(30) Priorité: 18.09.2006 FR 0653798
(43) Date de publication de la demande: 19.03.2008
(73) Titulaire: ULIS, 38113 Veurey Voroize (FR)
(72) Inventeur: Vilain, Michel, 38450, SAINT GEORGES DE COMMIERS (FR)
(74) Mandataire: Vuillermoz, Bruno

(56) Documents cités:
- US-A- 5 949 119
- US-B1- 6 198 098
- M WU, C.-F. LAI, W. FANG: "Integration of the DRIE, MUMPs, and bulk micromachining for superior micro-optical systems" IEEE, 2004, pages 97-100, XP002426974

## Description

### DOMAINE DE L'INVENTION

La présente invention concerne un dispositif électronique de détection comprenant une ou plusieurs microstructures, remplissant généralement une fonction électronique, avec bras et membrane suspendus au-dessus d'un substrat. Un tel dispositif électronique peut, par exemple, constituer le capteur bolométrique d'un détecteur de rayonnement infrarouge.

### ETAT ANTERIEUR DE LA TECHNIQUE

Dans le domaine des structures microélectroniques comportant une ou plusieurs microstructures électroniques avec bras et membrane suspendus au-dessus d'un substrat, on cherche à miniaturiser le plus possible ces microstructures. Il est donc souhaitable de minimiser l'épaisseur du bras qui maintient la membrane suspendue au-dessus du substrat et l'épaisseur de la membrane qui forme une partie active de la microstructure. De plus, il peut être souhaitable de minimiser la largeur des bras de maintien. Outre la réduction de l'encombrement des dispositifs électroniques qu'elle permet, une telle miniaturisation est susceptible d'améliorer les performances des microstructures.

Ainsi, dans le domaine des détecteurs microbolométriques matriciels utilisés pour observer des scènes éclairées par des rayons infrarouges, la membrane de chaque capteur composant le détecteur est prévue flottante, c'est-à-dire suspendue au-dessus du substrat pour en être isolée notamment thermiquement, et elle est reliée électriquement au substrat par l'intermédiaire d'un ou de plusieurs élément(s) longiligne(s) de maintien, communément dénommés « bras ».

Ces éléments de maintien ont pour fonction, d'une part, de maintenir la membrane sans contact à distance du substrat et, d'autre part, de la relier électriquement au substrat de manière à collecter les porteurs de charges libérés lors des interactions entre photons et membrane. De manière connue dans ce domaine, chaque membrane s'échauffe sous l'effet du rayonnement incident en fonction du flux émis par la scène observée. Cet échauffement induit une variation de la résistivité électrique de chaque capteur élémentaire, laquelle est alors exploitée pour réaliser une image de la scène observée.

La sensibilité d'un capteur élémentaire constitue une grandeur essentielle pour la performance globale du détecteur bolométrique. Cette sensibilité est proportionnelle à la résistance thermique existant entre la membrane sensible qui s'échauffe et le substrat commun qui demeure globalement isotherme, aussi bien spatialement que temporellement, c'est-à-dire en tout lieu et à tout instant.

C'est pourquoi, il est essentiel de maîtriser le dimensionnement du bras et de la membrane sensible de chaque capteur élémentaire du détecteur. Ainsi, l'étroitesse du bras, sa finesse ainsi que celle de la membrane sensible déterminent cette résistance thermique dans chaque capteur élémentaire et, partant, les performances globales du détecteur.

De plus, la vitesse de réponse d'un capteur microbolométrique à une variation temporelle du flux infrarouge provenant de la scène observée dépend de la masse totale de matière formant la membrane sensible. C'est pourquoi il faut minimiser l'épaisseur des couches fonctionnelles de la membrane flottante, pour minimiser l'inertie thermique de la membrane sensible et donc maximiser la vitesse de réponse d'un capteur élémentaire.

Cependant, la miniaturisation des bras et des membranes d'un détecteur implique généralement l'augmentation des contraintes mécaniques et thermiques qui s'exercent sur ces éléments, du fait de la diminution de la surface des sections exposées à ces contraintes. Or, de telles contraintes thermomécaniques imposent aux dispositifs électroniques de l'art antérieur des limites dimensionnelles, en deçà desquelles la déformation des éléments, bras et membranes, du capteur, leur fragilité ou encore leur susceptibilité entraîne des défauts géométriques (dispersion) dans l'agencement des capteurs élémentaires. Or, cette détérioration structurelle peut s'avérer néfaste pour la sensibilité et/ou la rigidité du détecteur.

En effet, il est nécessaire que les membranes présentent un positionnement uniforme dans l'ensemble du réseau bidimensionnel formant le détecteur matriciel, que ce soit en altitude ou en parallélisme par rapport au substrat. C'est pourquoi les bras, ou éléments longilignes de maintien de la membrane, représentent un élément important, dont les dimensions doivent être optimisées. De même, la membrane sensible doit être dimensionnée de manière à éviter sa déformation au cours du fonctionnement du détecteur tout en assurant de bonnes performances de détection et notamment une bonne vitesse de réponse. Or, les résistances mécaniques des bras et de la membrane aux sollicitations en flexion, torsion ou en cisaillement sont fonction des moments d'inertie de la section orthogonale de ces éléments par rapport aux axes de ces sollicitations. Ces résistances mécaniques diminuent donc d'autant plus vite avec l'épaisseur de ces éléments.

Ainsi, les dispositifs électroniques de l'art antérieur, tel que par exemple décrit dans le document US 5 949 119, présentent généralement des microstructures dont les bras présentent une épaisseur comprise entre 0,1 µm et 2 µm, une largeur comprise entre 0,5 µm et 2 µm et une longueur comprise entre 10 µm et 50 µm. Dans le cas des capteurs microbolométriques, de tels bras peuvent être réalisés en plusieurs couches, dont l'une au moins est électriquement conductrice. La forme générale d'un bras de capteur microbolométrique peut être allongée, rectiligne, en équerre (en « L ») ou en serpentin (en « S » en vue du dessus).

Dans le but d'augmenter la résistance mécanique du bras et/ou de la membrane flottante, il est connu du document EP-A-0 753 671 de renforcer uniquement les flancs latéraux de ces éléments. Il s'agit donc d'apposer des bordures de renfort sur les parois latérales des bras ou de la membrane.

Par ailleurs le document US 5 399 897 propose de rigidifier le bras et la membrane en leur conférant une courbure selon une direction perpendiculaire au plan défini par le substrat. Une telle structure permet effectivement d'augmenter quelque peu le moment d'inertie de la section des éléments ainsi incurvés.

D'autres exemples de rigidification d'une microstructure sont connus de US 6198098 et de l'article "Integration of the DRIE, MUMPs, and bulk micromachining for superior micro-optical systems, "Mingching Wu et al., IEEE 2004.

Les solutions décrites par ces documents de l'art antérieur permettent une relative augmentation de la rigidité des microstructures mis en oeuvre, mais cela demeure insuffisant au regard des contraintes thermomécaniques mises en jeu, lesquelles sont encore accrues du fait de la miniaturisation croissante de tels dispositifs électroniques. Ainsi, les bras ou les membranes des microstructures décrites par ces documents demeurent relativement flexibles et déformables, notamment lorsqu'ils sont sollicités selon une direction contenue dans le plan d'une section transversale à la dimension principale des bras.

En conséquence, en présence de telles contraintes, il peut survenir une flexion et/ou une torsion relativement importantes de la microstructure en question et, partant, un risque de défaillance, voire de dégradation du dispositif électronique ainsi équipé.

La présente invention a donc pour objet un dispositif électronique de détection performant dont le bras et/ou la membrane sensible ne présentent pas de déformabilité aussi grande que dans les dispositifs de l'art antérieur.

### EXPOSE DE L'INVENTION

La présente invention a pour objet un dispositif électronique de détection, dont le ou les bras et/ou la membrane présentent une résistance accrue aux sollicitations mécaniques et thermiques qu'ils subissent et dont les performances peuvent également être accrues.

L'invention concerne ainsi un dispositif électronique de détection comprenant un substrat et au moins une microstructure, cette microstructure comprenant une membrane et au moins un élément longiligne de maintien définissant chacun deux faces principales, toutes les faces principales étant parallèles, ladite membrane s'étendant sensiblement au regard et à distance du substrat. La membrane est solidarisée mécaniquement et connectée électriquement audit élément longiligne de maintien. L'élément longiligne de maintien est relié mécaniquement et électriquement au substrat par l'intermédiaire d'au moins un pilier.

Selon l'invention, ladite microstructure comprend en outre au moins un élément longiligne raidisseur de la membrane et/ou de l'élément longiligne de maintien, s'étendant et/ou solidarisé à l'une desdites faces principales de la microstructure, et formant avec celle-ci une section fermée et creuse selon un plan perpendiculaire à la longueur dudit élément raidisseur.

En d'autres termes, le bras et/ou la membrane de la microstructure est (sont) rigidifié(s) par au moins un élément faisant fonction de poutre située sur leur face en regard du substrat et/ou sur leur face opposée à la face en regard du substrat. Une telle poutre permet d'augmenter sensiblement les moments d'inertie des sections du bras et/ou de la membrane selon tous les axes principaux de ces sections.

La section creuse de l'élément raidisseur permet de rigidifier la microstructure électronique tout en limitant le surpoids mis en oeuvre, donc l'inertie thermique des éléments, bras et/ou, membrane ainsi renforcés.

Par l'expression « au regard et à distance », on entend « sans contact » ou « flottant ».

Par ailleurs, l'adjectif « longiligne » dans l'expression « élément longiligne de maintien » caractérise le fait que le bras présente une longueur déterminée libre et flottante entre son point de connexion à la membrane et son point de connexion au substrat. L'expression « élément longiligne de maintien » peut par conséquent désigner un bras de forme rectiligne, incurvée ou plus complexe, tel qu'un « S ».

En pratique, l'élément longiligne de maintien peut comprendre un élément raidisseur longiligne s'étendant sur toute sa longueur. Ainsi, le bras est rigidifié sur toute sa longueur. Il est donc possible de l'amincir et de le rétrécir tout en conservant une rigidité satisfaisante.

Selon l'invention, l'élément raidisseur s'étend selon une direction transversale à la face principale considérée de la microstructure.

Selon une forme de réalisation particulière de l'invention, la membrane comprend au moins un élément raidisseur s'étendant selon l'une des dimensions principales et sur toute la longueur de cette membrane. Une telle structure permet de rigidifier la membrane selon une direction privilégiée, de manière à résister à une contrainte selon un axe déterminé.

En pratique, l'élément raidisseur peut présenter une section transversale en forme de trapèze dont la base est reliée à cette microstructure.

Selon un mode de réalisation de l'invention, le dispositif peut comprendre une pluralité d'éléments raidisseurs s'étendant selon l'une et/ou les deux dimensions principales de la membrane. Une telle structure permet de rigidifier la membrane selon les deux directions du plan dans lequel elle est globalement située.

Selon une autre forme de réalisation particulière du mode précédent, le dispositif peut comprendre plusieurs éléments raidisseurs longilignes parallèles entre eux. Une telle caractéristique permet de renforcer la microstructure sur l'ensemble de la face principale concernée, que ce soit la face tournée vers le substrat ou la face extérieure.

Selon encore une autre forme de réalisation, ledit élément raidisseur se présente sous la forme d'un tube, s'étendant à la fois au dessus et en dessous du plan de la membrane (409).

Par ailleurs, l'invention concerne aussi un détecteur matriciel de rayonnement électromagnétique, tel que des rayons infrarouges. Selon l'invention, les capteurs élémentaires de ce détecteur sont chacun constitués d'un dispositif électronique tel qu'exposé précédemment et chacune des membranes comporte un matériau sensible à ce rayonnement.

Un tel détecteur est donc plus résistant aux contraintes mécaniques et thermiques qu'il subit, en particulier lors des phases de fonctionnement.

Par ailleurs, l'invention concerne un procédé de réalisation d'un dispositif électronique de détection comprenant un substrat et au moins une microstructure, laquelle comprend une membrane s'étendant sensiblement en regard et à distance du substrat, la membrane étant solidarisée mécaniquement et connectée électriquement à au moins un élément longiligne de maintien, ce dernier étant relié mécaniquement et électriquement au substrat, par l'intermédiaire d'au moins un pilier.

### BREVE DESCRIPTION DES FIGURES

La présente invention et les avantages qui en découlent, ressortiront aussi de la lecture de la description qui suit, faite en référence aux dessins qui représentent, de façon nullement limitative, des exemples de réalisation de l'invention et dans lesquels :
La figure 1 est une représentation schématique en perspective d'un dispositif électronique conforme à l'invention.
Les figures 2a et 2b sont des représentations schématiques en section réalisées selon la ligne brisée A-A de la figure 1.
Les figures 3a et 3b sont des représentations schématiques en section analogues aux figures 2a et 2b réalisées selon une variante de réalisation du dispositif illustré par la figure 1.
Les figures 4a et 4b sont des représentations schématiques en section analogues aux figures 2a et 2b, réalisées selon une autre variante de réalisation du dispositif illustré par la figure 1.

### MODE DE REALISATION DE L'INVENTION

Les différentes figures sont des représentations schématiques et, par conséquent, comportent des éléments hors échelle.

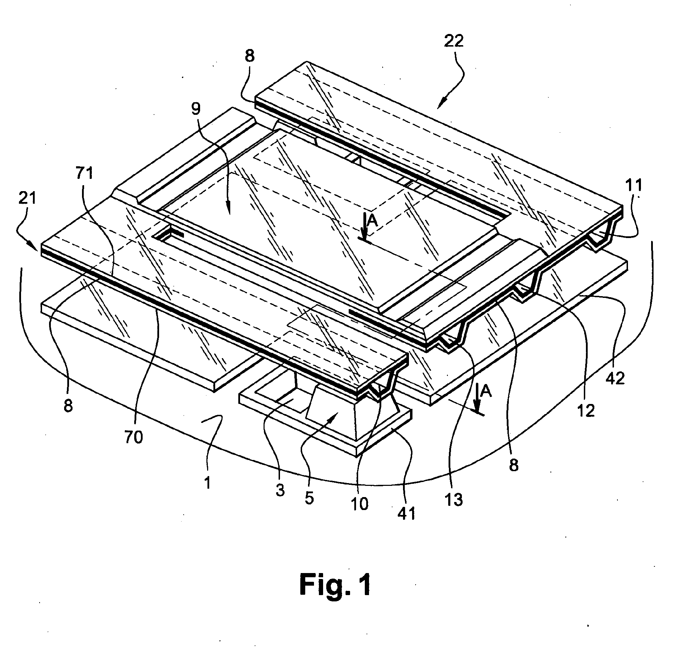

La figure 1 illustre un dispositif électronique conforme à l'invention et destiné à la détection de rayonnement infrarouge selon le principe connu des détecteurs microbolométriques.

Sur la figure 1, le capteur microbolométrique élémentaire comprend un substrat 1 recevant un circuit de lecture des signaux émis par les éléments actifs du capteur. Le substrat 1 est de forme globalement plane et sert de couche de base pour élaborer la microstructure, ici un capteur élémentaire, par des techniques monolithique de dépôt de couche mince, de lithographie, de gravure ou d'attaque chimique. Ainsi, le substrat **1** est commun à tous les capteurs élémentaires formant le détecteur matriciel.

La partie sensible du capteur élémentaire de la figure 1 est constitué par une membrane **9,** laquelle est montée flottante au-dessus du substrat **1.** Le matériau constitutif de la membrane **9** est sensible à la température, selon un comportement bolométrique, et il présente une épaisseur déterminée en fonction du rayonnement à détecter. Il peut s'agir par exemple, de silicium amorphe dopé ou de tout autre matériau sensible adéquat. La membrane **9** présente, de manière classique, une surface globalement plane de forme rectangulaire ou carrée de manière à collecter le rayonnement incident.

La membrane **9** est maintenue flottante ou suspendue au-dessus du substrat par l'intermédiaire de deux éléments longilignes de maintien **21** et **22.** Comme indiqué précédemment, de tels éléments de maintien sont communément dénommés bras de soutien ou bras de support dans le domaine des détecteurs bolométriques. En vue de dessus, les éléments longilignes de maintien **21** et **22** présentent ici chacun la forme classique d'un « L » ou d'une équerre. Ils sont mécaniquement solidaires de la membrane **9** au niveau de leurs extrémités coudées.

De plus, les éléments longilignes de maintien **21** et **22** comportent une couche en matériau conducteur **8** en contact avec la membrane **9** à chaque extrémité coudée des bras **21** et **22,** de manière à collecter les signaux émis par la membrane sensible **9.**

Ainsi, les conducteurs formés par la couche **8** sont aptes à jouer le rôle d'électrodes pour la membrane bolométrique **9.** Dans l'exemple de la figure 1, la couche conductrice se trouve noyée entre deux couches remplissant des fonctions mécaniques. Néanmoins, elle pourrait aussi constituer une peau externe sur les bras **21** et **22.**

Chacun des bras **21** et **22** est supporté par un pilier **5** positionné vers l'extrémité du bras correspondant **21** ou **22** opposée à l'extrémité coudée reliée à la membrane **9.** Les piliers **5** sont ainsi intercalés entre le substrat **1** et la région globalement plane définie par les bras **21** et **22** et par la membrane **9.** Outre leur fonction de support mécanique de l'ensemble constitué par les bras **21** et **22** et par la membrane **9,** les piliers **5** assurent la connexion électrique entre le substrat **1** et chacune des deux électrodes formées par la couche en matériaux conducteur **8.**

Conformément à l'invention, chacun des bras **21** et **22** est associé à un élément raidisseur longiligne **10, 11** destiné à augmenter la résistance mécanique du capteur élémentaire et, en particulier, du bras correspondant. En pratique, les deux éléments raidisseur longilignes **10** et **11** s'étendent sur toute la longueur des bras **21** et **22** auxquels ils sont respectivement associés. Dans l'exemple de la figure 1, les éléments raidisseurs longilignes présentent une section transversale en forme de trapèze ouvert sur le coté supérieur et dont la base est reliée à la microstructure, bras ou membrane.

De tels éléments raidisseurs longilignes présentent donc ici la forme de poutres et permettent d'augmenter considérablement les moments d'inertie des sections transversales des bras **21** et **22** notamment par rapport aux axes contenus dans le plan de ces sections transversales.

Par ailleurs, la membrane sensible **9** est également renforcée par deux éléments raidisseurs longilignes **12** et **13** s'étendant selon l'une de ses dimensions principales, en l'occurrence sur toute sa longueur. A l'instar des poutres **10** et **11,** les éléments raidisseurs **12** et **13** s'étendent sur la face principale de la microstructure électronique qui est orienté vers le substrat **1,** c'est-à-dire la face inférieure. De plus, les éléments raidisseurs **10-13** s'étendent selon une direction transversale à la face principale qui les loge.
Par ailleurs les quatre éléments raidisseurs sont creux, c'est-à-dire qu'ils définissent une structure globalement tubulaire. Cette caractéristique permet de limiter le surpoids engendré par les éléments raidisseurs **10-13,** tout en conférant aux microstructures des moments d'inertie augmentés selon les trois axes.

De plus, les poutres **10-13** peuvent ne pas s'étendre sur toute la longueur ou toute la largeur des bras **21-22** ou de la membrane **9,** mais au contraire être remplacées par une pluralité de petits éléments raidisseurs disjoints. Une telle structure permet notamment de limiter la masse des éléments raidisseurs tout en conférant à la microstructure la résistance mécanique recherchée.

La figure 1 illustre donc un dispositif électronique unitaire conforme à l'invention constituant un capteur élémentaire pour détecteur bolométrique. Pour former un détecteur complet, il alors est nécessaire de juxtaposer sous forme de matrice une pluralité de capteurs élémentaires identiques, ce qui permet de former une rétine bidimensionnelle classique dans laquelle les piliers de support, les bras, voire les membranes elles-mêmes peuvent être communs à tout ou partie des capteurs élémentaires.

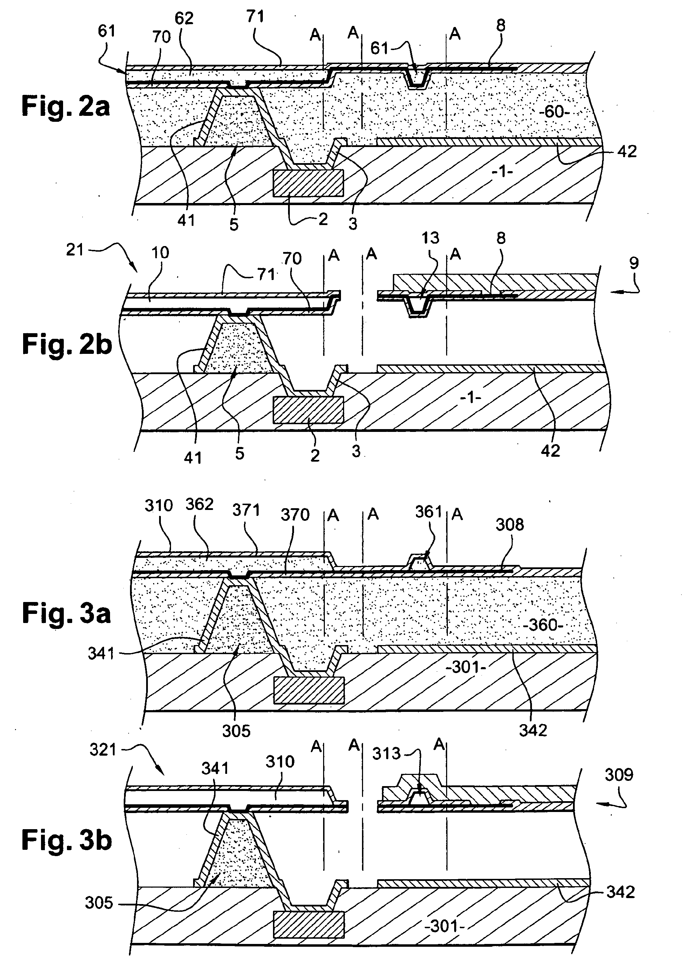

Les figures 2a et 2b illustrent un dispositif électronique issu d'un procédé de fabrication conforme à l'invention. La figure 2a représente une étape de ce procédé, tandis que la figure 2b représente le dispositif électronique dans son état final tel que celui de la figure 1. Pour faciliter la lecture, les changements d'orientation de la ligne brisée A-A sont indiqués en traits mixtes sur les figures 2a et 2b.

Pour réaliser la conduction des signaux électriques vers le substrat 1, celui-ci comporte des parties métalliques 2, dont la couche de passivation présente des ouvertures 3. Ainsi, ces ouvertures jouent le rôle de plots pour le contact électrique de manière à transmettre les signaux générés dans la microstructure au circuit de lecture associé au substrat 1.

Selon la technique bien connue de l'homme du métier, dite de « *spin-on glass* », on dépose alors une première couche en matériau planarisant, c'est-à-dire dont la surface supérieure est relativement lisse, de nature organique tel que le polyimide ou de nature minérale comme par exemple l'oxyde de silicium. Puis, on ôte le matériau constituant cette première couche sauf à proximité des ouvertures 3, de manière à ne laisser subsister que des piliers 5. La hauteur des piliers 5 est typiquement de l'ordre de 1,5 µm à 2 µm, de manière à définir un capteur bolométrique sensible à des rayons dont la longueur d'onde est comprise entre 8 µm et 14 µm.

L'enlèvement de matière autour des piliers 5 est ici réalisé au moyen d'un procédé lithographique associé à une gravure. Il peut cependant être réalisé seulement en lithographie si le matériau planarisant est photosensible. Il faut également noter que la forme des piliers 5 avec une section trapézoïdale n'est donnée ici qu'à titre exemplatif et que les piliers 5 peuvent présenter des formes différentes sans pour autant sortir du cadre de cette invention. Bien évidement, l'étape de réalisation des piliers 5 est effectuée de manière à dégager le fond des ouvertures 3 de la couche de passivation, de façon à découvrir la surface non passivée des parties métalliques 2.

Au cours de l'étape suivante, on dépose sur l'ensemble de la surface résultant des étapes précédentes, selon une technique classique, une deuxième couche 4 en matériaux électriquement conducteurs. Cette deuxième couche peut être typiquement composée de titane et d'aluminium.

Puis on traite cette couche par lithographie et gravure de manière, d'une part, à dissocier les zones de continuité électrique **41** entre parties métalliques **2** et la surface externe des piliers **5** et, d'autre part, à définir une strate formant classiquement un réflecteur **42** pour le rayonnement détecté. Un tel réflecteur permet en effet de réémettre vers la membrane sensible **9** les rayons infrarouges qui traversent partiellement cette membrane. Cela permet de maximiser le flux de rayonnement interagissant avec la membrane **9** et, partant, le rapport signal sur bruit du détecteur.

L'étape suivante consiste à déposer une autre couche en matériau planarisant **60,** par exemple en polyimide, de façon à noyer les couches précédemment déposées, en particulier les piliers **5,** avec une surépaisseur de l'ordre de 0,1 µm à 0,5 µm. Ainsi, l'épaisseur moyenne totale atteint désormais environ 2 µm, ce qui représente sensiblement la hauteur à laquelle se trouvent les parties flottant au-dessus du substrat **1** (bras et membrane).

L'étape suivante, selon l'une des caractéristiques de l'invention, consiste à réaliser des rainures **61** sur la surface de la couche **60** en matériau planarisant. Ces rainures **61** peuvent être réalisées par application d'un masque lithographique associé à une gravure « sèche », de manière à contrôler les dimensions et la forme de ces rainures **61.** Les ouvertures du masque lithographique correspondent aux emplacements où l'on souhaite placer les éléments raidisseurs. Ainsi, pour placer un élément raidisseur au niveau d'un bras **21** ou **22** de la microstructure, il faut réaliser une rainure à l'emplacement approprié, c'est-à-dire dans le prolongement et au-dessus du pilier **5** (partie gauche des figures 2a et 2b). C'est pourquoi il est souhaitable de laisser le matériau planarisant **60** recouvrir les piliers 5. A l'inverse, telle qu'elle est disposée sur la figure 2a, la rainure **61** est destinée à former un élément raidisseur pour la membrane **9.**

Par ailleurs, pour maîtriser la forme de la section transversale des rainures **61,** on peut mettre en oeuvre un procédé anisotrope selon la direction verticale en contrôlant le profil d'angle. De cette manière, on peut réaliser des éléments raidisseurs présentant une section transversale de forme trapézoïdale, à l'instar des poutres **10-13** illustrées sur la figure 1.

Par la suite, on dépose une couche en matériau diélectrique **70,** tel qu'un oxyde ou un nitrure de silicium, en mettant en oeuvre une méthode conventionnelle de dépôt chimique en phase vapeur (CVD, de l'expression anglo-saxonne « *Chemical Vapor Deposition* »). L'épaisseur de la couche diélectrique **70** peut être comprise entre 10 nm et 50 nm. De plus, il est nécessaire d'appliquer un masque lithographique et de réaliser une gravure adéquate pour éliminer le matériau **70** du sommet des piliers **5.** En effet, la conduction des signaux électriques recueillis par les bras **21** et **22** est transmise au circuit de lecture du substrat **1** par l'intermédiaire des sommets des piliers **5.**

L'étape suivante du procédé objet de la présente invention consiste à déposer une fine couche **8** en matériau électriquement conducteur tel que le nitrure de titane selon une technique classique. Comme indiqué en relation avec la figure 1, la couche **8** permet d'assurer la conduction électrique au sein des bras **21** et **22** et d'une partie de la membrane sensible **9.** La couche **8** forme ainsi deux électrodes pour la membrane bolométrique **9.** Comme précédemment, il faut appliquer un masque lithographique et une gravure adaptée après le dépôt de la couche **8** de manière à définir le contour de la zone conductrice **8,** qui forme globalement un « L » en vue du dessus, comme le montre la figure 1.

On dépose ensuite une nouvelle couche en matériau planarisant **62** sur toute la surface de la microstructure, puis on l'amincit, par exemple par gravure sèche, jusqu'à dégager, ou libérer, toutes les surfaces situées en dehors des rainures **61** définissant des éléments raidisseurs caractéristiques de l'invention. Le matériau constitutif de la couche **62** peut être identique au matériau constituant la couche **60.** Puis on dépose une seconde couche en matériau diélectrique **71** selon une technique analogue à celle employée pour former la couche **70.**

Les étapes suivantes sont illustrées par la figure 2b, laquelle schématise le dispositif électronique de détection dans son état final et fonctionnel, tel celui de la figure 1. Pour parvenir à cet état final, on applique tout d'abord un masque lithographique de manière à ouvrir des surfaces de contact électrique à travers la couche **71,** puis on grave cette couche de manière connue pour mettre localement à nu la couche électriquement conductrice **8.** Dans l'exemple des figures **1** et **2****,** la gravure est réalisée sur les côtés de la membrane **9** situés dans le prolongement de chaque extrémité coudée.

L'étape suivante consiste à déposer un matériau à caractère bolométrique sur toute la surface de la membrane **9.** Ce matériau peut être par exemple composé de silicium amorphe dopé déposé selon une épaisseur apte à remplir la fonction thermométrique dévolue à la membrane sensible **9.**

L'épaisseur de cette couche bolométrique dépend du rayonnement que l'on souhaite détecter et elle peut être comprise entre 20 nm et 5000 nm. Ainsi, le matériau bolométrique permet de constituer une résistance électrique qui s'étend entre les zones latérales allongées permettant le contact électrique avec la couche électriquement conductrice **8.**

L'étape suivante consiste à éliminer une partie du matériau bolométrique de manière à dégager la couche diélectrique **71** au niveau des bras **21** et **22.** En effet les bras **21** et **22** doivent, de manière connue, présenter une résistance thermique élevée et, par conséquent, être de préférence exempts du matériau bolométrique.

Enfin, un masque lithographique est appliqué sur la structure résultant de toutes les étapes précédemment décrites, de façon à délimiter les contours définitifs de la membrane **9** et des bras ou éléments de maintien longilignes **21** et **22.**

L'ultime étape du procédé de fabrication d'un dispositif électronique conforme à l'invention consiste à éliminer la couche **60,** par exemple au moyen d'un plasma d'oxygène, ou d'un procédé équivalent dans le cas où la couche **60** est de nature organique. Après élimination de la couche **60,** la membrane sensible **9** et la majeure partie des bras **21** et **22** deviennent alors flottantes, c'est dire qu'elles sont désormais suspendues sans contact au-dessus du substrat **1** et plus précisément de la couche électriquement conductrice **4.** L'étape d'élimination de la couche **60** permet également d'éliminer le matériau sacrificiel emplissant les rainures **61,** si bien que les éléments raidisseurs **10-13** sont alors vidés pour présenter finalement une section creuse.

Les figures **3a** et **3b** illustrent une seconde forme de réalisation du dispositif électronique et de son procédé de fabrication conformes à l'invention, la figure 3a présentant un état intermédiaire, tandis que la figure 3b illustre l'état final. Selon cette forme de réalisation de l'invention, les éléments raidisseurs ne sont plus réalisés en creux dans la couche **360,** mais ils forment au contraire autant de saillies au-dessus de la couche électriquement conductrice **308.** Par conséquent, les éléments raidisseurs sont alors réalisés sur la face principale supérieure des bras et de la membrane c'est-à-dire sur leur face libre, opposée à leur face principale tournée vers le substrat (face inférieure).

Pour réaliser de tels éléments raidisseurs **310, 313** il faut donc réaliser les mêmes étapes que celles du procédé précédemment décrit, sans appliquer de masque lithographique particulier sur la couche **360** avant de déposer la couche diélectrique **370.** A l'inverse, il faut appliquer un masque lithographique puis réaliser une gravure sur la couche **361, 362** en matériau planarisant et ce, avant de déposer la couche diélectrique **371.**

Pour maîtriser les dimensions et la forme de la section transversale des éléments raidisseurs **310, 313,** il est possible de réaliser une étape d'érosion isotrope de la résine photosensible formant le masque lithographique mis en oeuvre pour former les saillies définissant les éléments raidisseurs **310, 313.** L'épaisseur de la couche **361, 362** est déterminée en fonction de la hauteur souhaitée pour les éléments raidisseurs **310, 313.**

Après réalisation des saillies **310, 313,** on dépose une couche diélectrique **371** à l'instar de la couche **71** illustrée par les figures 2a et 2b. Enfin, on dépose une couche en matériau bolométrique avant de graver bras et membrane, puis d'éliminer la couche intermédiaire sacrificielle **360.** La membrane **309** résultant de ce procédé alternatif présente donc des saillies au droit des éléments raidisseurs.

Compte tenu des différences entre les deux procédés de fabrication, il peut être souhaitable de réaliser des piliers **305** légèrement plus élevés que les piliers **5** de façon à conserver la distance idoine définissant l'intervalle vide entre le substrat et la membrane sensible.

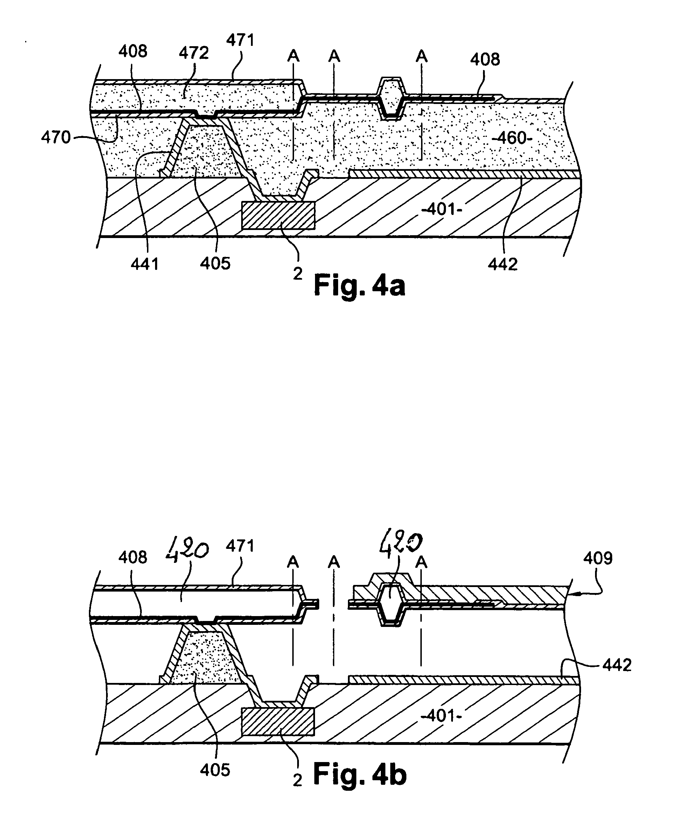

Selon une autre variante de l'invention illustrée au sein des figures 4a et 4b, on met en oeuvre des éléments raidisseurs réalisés en creux et en saillie, les creux et les saillies étant respectivement à l'aplomb les uns des autres (voir figure 4b, qui illustre l'état final). Ainsi, lesdits éléments raidisseurs sont-ils constitués de tubes **420,** qui s'étendent à la fois au dessus et en dessous du plan de la membrane **409,** celle-ci s'étendant sensiblement au niveau du plan équateur desdits tubes. Chacun des tubes est en fait défini par un élément raidisseur en creux **413** et par un élément raidisseur en saillie **413',** l'élément raidisseur en creux recevant la couche en matériau conducteur **408** formant les électrodes de la membrane bolométrique **409.**

On a de fait représenté sur les figures 4a et 4b les éléments essentiels entrant dans la constitution du détecteur, les références numériques étant identiques à celles des figures2a et 2b, mais augmentées de 400, et le procédé pour aboutir à cette forme de réalisation étant identique ou similaire à ceux précédemment décrits.

Ainsi, un dispositif électronique conforme à la présente invention possède des moments d'inertie des sections transversales des éléments définissant les structures flottantes, ces moments d'inertie étant augmentés par rapport au dispositif de l'art antérieur. Un tel dispositif électronique présente donc une résistance aux contraintes mécaniques et thermiques supérieure, notamment en flexion, flambage, fluage etc. Dans le cadre de la réalisation de capteurs bolométriques, il est ainsi possible de multiplier par un facteur 2 les résistances mécaniques d'un bras ou d'une membrane par rapport aux capteurs bolométriques antérieurs et ce, avec des formes simples de bras et de membrane.

En conséquence, il est alternativement possible de réduire les épaisseurs des bras et/ou de la membrane ainsi que leur largeur, sans pour autant dégrader la tenue mécanique de ces éléments. Une telle réduction des dimensions de ces éléments présente l'avantage d'augmenter leur résistance thermique, ce qui entraîne l'augmentation de la sensibilité du capteur élémentaire, s'il s'agit d'un détecteur bolométrique. En effet, la résistance thermique des bras par unité de longueur dépend de la quantité de matière présente dans la section transversale et elle est définie par la relation Rₜₕ=ρL/s, où :
- Rₜₕ est la résistance thermique du bras par unité de longueur;
- p représente la résistivité thermique équivalente des matériaux formant la section transversale;
- L représente la longueur résistante considérée;
- et s la superficie de la section transversale.

Ainsi, plus la section s est petite, plus la résistance thermique Rₜₕ est élevée et plus la sensibilité du détecteur augmente.

L'augmentation de la rigidité de la membrane permet comme on l'a vu d'en diminuer l'épaisseur, donc de diminuer sa masse et son inertie thermique. En conséquence les performances dynamiques du capteur élémentaire ainsi constitué se trouvent accrues par rapport à celles d'un capteur élémentaire de l'art antérieur.

On peut ainsi réaliser un capteur bolométrique dont les bras présentent, à l'instar des capteurs de l'art antérieur, une largeur comprise entre 1 µm et 1,5 µm, mais avec des épaisseurs pour les couches diélectriques **70** et **71** réduites à 15 nm, voire 10 nm, tandis que les couches diélectriques de l'art antérieur présentent une épaisseur d'au moins 30 nm chacune. Une telle réduction d'épaisseur permet d'augmenter de 50 à 100% la résistance thermique du bras, donc la sensibilité bolométrique du capteur, tout en conservant substantiellement la même rigidité transversale, c'est-à-dire la même résistance élastique à la déformation du bras. Par ailleurs, l'augmentation de la surface développée de la face principale de la membrane qui reçoit les éléments raidisseurs n'a pas d'influence significative sur la sensibilité du capteur élémentaire.

Les exemples de réalisation décrits ci-dessus concernent le domaine des détecteurs bolométriques, néanmoins le principe général de l'invention, comportant l'adjonction d'éléments raidisseurs à une microstructure, peut être appliqué à d'autres domaines de microstructures dites « flottantes », ou dispositifs électroniques, sans pour autant sortir du cadre de cette invention.

Comme exemple de tels dispositifs, on peut citer les résonateurs acoustiques, sonomètres, gyromètres, accéléromètres et autres dispositifs apparentés pour lesquels les caractéristiques élastiques, électroniques, thermoélastiques ou optoélastiques sont déterminantes.

## Revendications

1. Dispositif électronique de détection comprenant un substrat (1 ; 301 ; 401) et au moins une microstructure, ladite microstructure comprenant une membrane (9; 309; 409) et au moins un élément longiligne de maintien (21, 22), définissant chacun deux faces principales, toutes les faces principales étant parallèles, ladite membrane s'étendant sensiblement en regard et à distance dudit substrat (1 ; 301 ; 401) et étant solidarisée mécaniquement et connectée électriquement audit élément longiligne de maintien, lequel est relié mécaniquement et électriquement au substrat (1 ; 301 ; 401) par l'intermédiaire d'au moins un pilier (5 ; 305 ; 405), ***caractérisé* en ce que** la microstructure comprend en outre au moins un élément longiligne raidisseur (10-13 ; 310, 313 ; 413, 413' 420) de la membrane et/ou de l'élément longiligne de maintien, s'étendant et/ou solidarisé à l'une desdites faces principales de la microstructure et formant avec celle-ci une section fermée et creuse selon un plan perpendiculaire à la longueur dudit élément raidisseur.

2. Dispositif électronique de détection selon la revendication 1, ***caractérisé* en ce que** l'élément longiligne de maintien (21, 22) comprend un élément raidisseur longiligne (10, 11 ; 310 ; 420) s'étendant sur toute sa longueur.

3. Dispositif électronique de détection selon la revendication 1, ***caractérisé* en ce que** l'élément longiligne de maintien (21, 22) comprend une pluralité de petits éléments raidisseurs disjoints.

4. Dispositif électronique de détection selon l'une des revendications précédentes, ***caractérisé* en ce que** la membrane (9 ; 309 ; 409) comprend au moins un élément raidisseur (12) s'étendant selon l'une des dimensions principales et sur toute la longueur de ladite membrane (9 ; 309 ; 409).

5. Dispositif électronique de détection selon l'une des revendications 1 à 3, ***caractérisé* en ce que** la membrane (9 ; 309 ; 409) comprend une pluralité de petites éléments raidisseurs disjoints s'étendant selon l'une des dimensions principales de ladite membrane.

6. Dispositif électronique de détection selon l'une des revendications précédentes, ***caractérisé* en ce que** l'élément raidisseur (10-13 ; 310, 313) présente une section transversale en forme de trapèze dont la base est reliée à ladite microstructure.

7. Dispositif électronique de détection comprenant un substrat (401) et au moins une microstructure, ladite microstructure comprenant une membrane (409) et au moins un élément longiligne de maintien (21, 22), définissant chacun deux faces principales, toutes les faces principales étant parallèles, ladite membrane s'étendant sensiblement en regard et à distance dudit substrat (401) et étant solidarisée mécaniquement et connectée électriquement audit élément longiligne de maintien, lequel est relié mécaniquement et électriquement au substrat (401) par l'intermédiaire d'au moins un pilier (405), ***caractérisé* en ce que** la microstructure comprend en outre au moins un élément raidisseur (420) de la membrane (409), ledit élément raidisseur se présentant sous la forme d'un tube, composé d'une première partie (413) formant relief dans une direction orthogonale au plan principal de la microstructure, et d'une seconde partie (413') formant relief dans la direction opposée, ledit tube s'étendant à la fois au dessus et en dessous du plan de la membrane (409).

8. Dispositif électronique de détection selon l'une des revendications précédentes, ***caractérisé* en ce qu'**il comprend une pluralité d'éléments raidisseurs (10-13 ; 310, 313 ; 420) s'étendant selon l'une et/ou l'autre dimension(s) principale(s) de ladite membrane (9 ; 309).

9. Dispositif électronique de détection selon l'une des revendications 1 à 8, ***caractérisé* en ce qu'**il comprend plusieurs éléments raidisseurs (10-13 ; 310, 313 ; 420) longilignes parallèles entre eux.

10. Détecteur matriciel de rayonnement électromagnétique, tel que des rayons infrarouges, comprenant une pluralité de capteurs élémentaires du rayonnement en question, ***caractérisé* en ce que** lesdits capteurs élémentaires sont chacun constitués d'un dispositif électronique selon l'une des revendications précédentes, chacune desdites membranes comportant un matériau sensible à ce rayonnement.

## Claims

1. An electronic detection device comprising a substrate (1; 301 ; 401) and at least one microstructure, said microstructure comprising a membrane (9; 309 ; 409) and at least one longilineal retention element (21, 22) each defining two main faces, all main faces being parallel, said membrane extending substantially facing and at a distance from said substrate (1; 301 ; 401) and being mechanically attached and electrically connected to said longilineal retention element which is mechanically and electrically connected to the substrate (1; 301 ; 401) via at least one post (5; 305 ; 405), ***characterised* in that** the microstructure also comprises at least one element (10-13; 310, 313 ; 413, 413', 420) stiffening the membrane and/or the longilineal retention element, said stiffening element extending and/or being fixed to one of said main faces of the microstructure and forming with the latter a closed and hollow section along a plan perpendicular to the length of said stiffening element.

2. An electronic detection device as claimed in claim 1, ***characterised* in that** the longilineal retention element (21, 22) comprises one longilineal stiffening element (10, 11 ; 310 ; 420) extending over its entire length.

3. An electronic detection device as claimed in any of claims 1 and 2, ***characterised* in that** the longilineal retention element (21, 22) comprises a plurality of small discontinuous stiffener elements.

4. An electronic detection device as claimed in any of the above claims, ***characterised* in that** the membrane (9; 309 ; 409) comprises at least one stiffener element (12) extending in the direction of one of the main dimensions and over the entire length of said membrane (9; 309 ; 409).

5. An electronic detection device as claimed in any of claims 1 to 3, ***characterised* in that** the membrane (9; 309 ; 409) comprises a plurality of small discontinuous stiffener elements extending in the direction of one of the main dimensions of said membrane.

6. An electronic detection device as claimed in any of the above claims, ***characterised* in that** the stiffener element (10-13; 310, 313) has a trapezoidal shaped cross-section, the base of which is linked to said microstructure.

7. An electronic detection device comprising a substrate (401) and at least one microstructure, said microstructure comprising a membrane (409) and at least one longilineal retention element (21, 22) each defining two main faces, all main faces being parallel, said membrane extending substantially facing and at a distance from said substrate (401) and being mechanically attached and electrically connected to said longilineal retention element which is mechanically and electrically connected to the substrate (401) via at least one post (405), ***characterised* in that** the microstructure also comprises at least one element (420) stiffening the membrane (409), said stiffening element having the form of a tube, comprising a first part (413) protruding along a direction perpendicular to the main plane of the microstructure, and a second part (413') protruding in the opposite direction, said tube extending both above and under of the plane of the membrane (409).

8. An electronic detection device as claimed in any of the proceeding claims, ***characterised* in that** it comprises a plurality of stiffening elements (10-13; 310, 313 ; 420) extending along one and/or the other main dimension(s) of said membrane (9, 309).

9. An electronic detection device as claimed in any of the proceeding claims, ***characterised* in that** it comprises several longilineal stiffening elements (10-13; 310, 313 ; 420) which are parallel to each other.

10. An array detector for electromagnetic radiation such as infrared radiation comprising a plurality of elementary sensors for the radiation in question, ***characterised* in that** said elementary sensors each consist of an electronic device as claimed in any of the above claims, each of said membranes comprising a material which is sensitive to this radiation.

## Patentansprüche

1. Elektronische Erfassungsvorrichtung mit einem Substrat (1; 301; 401) und mindestens einer Mikrostruktur, wobei die Mikrostruktur eine Membran (9; 309; 409) und mindestens ein langgliedriges Halteelement (21, 22) aufweist, die jeweils zwei Hauptseiten definieren, wobei alle Hauptseiten parallel sind, wobei sich die Membran im Wesentlichen gegenüber dem und im Abstand zum Substrat (1; 301; 401) erstreckt und mechanisch mit dem langgliedrigen Halteelement fest verbunden und elektrisch an dieses angeschlossen ist, das mittels mindestens einer Stütze (5; 305; 405) mechanisch und elektrisch mit dem Substrat (1; 301; 401) verbunden ist, **dadurch gekennzeichnet, dass** die Mikrostruktur außerdem noch mindestens ein langgliedriges Versteifungselement (10-13; 310, 313; 413, 413', 420) für die Membran und/oder das langgliedrige Halteelement aufweist, das sich zu einer der Hauptseiten der Mikrostruktur erstreckt und/oder fest damit verbunden ist und mit dieser einen geschlossenen und vertieften Abschnitt entlang einer Ebene bildet, die senkrecht zur Länge des Versteifungselements ist.

2. Elektronische Erfassungsvorrichtung nach Anspruch 1, **dadurch gekennzeichnet, dass** das langgliedrige Halteelement (21, 22) ein langgliedriges Versteifungselement (10, 11; 310; 420) aufweist, das sich über seine gesamte Länge erstreckt.

3. Elektronische Erfassungsvorrichtung nach Anspruch 1, **dadurch gekennzeichnet, dass** das langgliedrige Halteelement (21, 22) mehrere voneinander getrennte, kleine Versteifungselemente aufweist.

4. Elektronische Erfassungsvorrichtung nach einem der vorhergehenden Ansprüche, **dadurch gekennzeichnet, dass** die Membran (9; 309; 409) mindestens ein Versteifungselement (12) aufweist, das sich entlang einer der Hauptabmessungen und über die gesamte Länge der Membran (9; 309; 409) erstreckt.

5. Elektronische Erfassungsvorrichtung nach einem der Ansprüche 1 bis 3, **dadurch gekennzeichnet, dass** die Membran (9; 309; 409) mehrere getrennte, kleine Versteifungselemente aufweist, die sich entlang einer der Hauptabmessungen der Membran erstrecken.

6. Elektronische Erfassungsvorrichtung nach einem der vorhergehenden Ansprüche, **dadurch gekennzeichnet, dass** das Versteifungselement (10-13; 310; 313) einen Querschnitt in Form eines Trapezes aufweist, dessen Basis mit der Mikrostruktur verbunden ist.

7. Elektronische Erfassungsvorrichtung mit einem Substrat (401) und mindestens einer Mikrostruktur, wobei die Mikrostruktur eine Membran (409) und mindestens ein langgliedriges Halteelement (21, 22) aufweist, die jeweils zwei Hauptseiten definierten, wobei alle Hauptseiten parallel sind, wobei sich die Membran im Wesentlichen gegenüber dem und im Abstand zum Substrat (401) erstreckt und mechanisch mit dem langgliedrigen Halteelement fest verbunden und elektrisch an dieses angeschlossen ist, das mittels mindestens einer Stütze (405) mechanisch und elektrisch mit dem Substrat (401) verbunden ist, **dadurch gekennzeichnet, dass** die Mikrostruktur außerdem noch mindestens ein Versteifungselement (420) für die Membran (409) aufweist, wobei sich das Versteifungselement in Form einer Röhre darstellt, die sich aus einem ersten Teil (413), das in einer zur Hauptebene der Mikrostruktur orthogonalen Richtung eine Erhöhung bildet, und aus einem zweiten Teil (413') zusammensetzt, das in der entgegengesetzten Richtung eine Erhöhung bildet, wobei sich die Röhre gleichzeitig über und unter der Ebene der Membran (409) erstreckt.

8. Elektronische Erfassungsvorrichtung nach einem der vorhergehenden Ansprüche, **dadurch gekennzeichnet, dass** sie mehrere Versteifungselemente (10-13; 310, 313; 420) aufweist, die sich entlang der einen und/oder anderen Hauptabmessung der Membran (9; 309) erstrecken.

9. Elektronische Erfassungsvorrichtung nach einem der Ansprüche 1 bis 8, **dadurch gekennzeichnet, dass** sie mehrere zueinander parallele, langgliedrige Versteifungselemente (10-13; 310, 313; 420) aufweist.

10. Matrixdetektor für elektromagnetische Strahlung, wie etwa Infrarotstrahlen, mehrere Elementarsensoren für die in Frage kommende Strahlung aufweisend, **dadurch gekennzeichnet, dass** die Elementarsensoren jeweils aus einer elektronischen Vorrichtung nach einem der vorhergehenden Ansprüche aufgebaut sind, wobei jede der Membranen ein für diese Strahlung empfindliches Material umfasst.
